# EUROPÄISCHE PATENTSCHRIFT

(11) **EP 2 719 870 B1**
(45) Veröffentlichungstag und Bekanntmachung des Hinweises auf die Patenterteilung: **07.12.2016**
(21) Anmeldenummer: 12188314.4
(22) Anmeldetag: 12.10.2012
(51) Int. Cl.: F01D 25/16, B22F 3/11, B29C 44/04, B29C 44/60

(54) **Lagerstern, zugehöriges Herstellungsverfahren und entsprechende Strömungsmaschine**
Star-shaped bearing support, corresponding method of manufacturing and fluid flow engine
Supportage de palier en étoile, procédé de fabrication et turbomachine associés

(43) Veröffentlichungstag der Anmeldung: 16.04.2014
(73) Patentinhaber: MTU Aero Engines AG, 80995 München (DE)
(72) Erfinder: Böck, Alexander, 82288 Kottgeisering (DE)

(56) Entgegenhaltungen:
- EP-A2- 1 149 987
- WO-A2-2010/023059
- GB-A- 2 112 084
- GB-A- 2 114 669
- US-A- 1 363 174
- CLAUS EMMELMANN ET AL: "<title>Bionic lightweight design by laser additive manufacturing (LAM) for aircraft industry</title>", PROCEEDINGS OF SPIE, Bd. 8065, 13. April 2011 (2011-04-13), Seite 80650L, XP055057202, ISSN: 0277-786X, DOI: 10.1117/12.898525
- Katrin Prudenz: "Bionische Konstruktion_ Bauteile aus der Natur ableiten", , 19. September 2011 (2011-09-19), XP055057339, www.lightweight-design.de Gefunden im Internet: URL:http://www.lightweight-design.de/index .php;do=show/site=lwd/sid=234009411514b00e c79961439538212/alloc=135/id=14534 [gefunden am 2013-03-21]
- Martin Bussmann ET AL: "New manufacturing techniques for new engine component designs", , 16. September 2011 (2011-09-16), Seiten 1-9, XP055057207, ISABE 2011 Gefunden im Internet: URL:http://www.mtu.de/en/technologies/engi neering_news/others/Rued_New_manufacturing _techniques_en.pdf [gefunden am 2013-03-20]

## Beschreibung

Die Erfindung betrifft einen Lagerstern für eine Strömungsmaschine nach dem Oberbegriff des Patentanspruchs 1, ein Verfahren zur Herstellung eines Lagersterns sowie eine Strömungsmaschine.

Lagersterne für Strömungsmaschinen haben gewöhnlich einen Innenring zur Positionierung zumindest eines Rotorlagers und eine Vielzahl von Radialstreben, die über den Außenempfang des Innenrings verteilt sind und kopfseitig mit einem Maschinengehäuse verbindbar sind. Bei bekannten Strömungsmaschinen ist jeweils ein Lagerstern beispielsweise zwischen einer Hochdruckturbine und einer Niederdruckturbine angeordnet und trägt dabei als statische Struktur ein Lager des Hochdruckrotors sowie ein Lager der Niederdruckturbine. Durch wechselnde Flugmanöver und durch thermische Belastungen entstehen eine Vielfalt von Belastungsfällen, welche üblicherweise nur durch eine relativ massive Ausgestaltung des Lagersterns beherrschbar sind. Die massive Ausgestaltung führt jedoch zu einem hohen Gewicht des Lagersterns und somit auch zu einem hohen Gewicht der Strömungsmaschine.

Das Dokument GB 2 112 084 A offenbart einen herkömmlichen Lagerstern für eine Strömungsmaschine.

Das Dokument "Bionic Lightweight Design by Laser Additive Manufacturing (LAM) for Aircraft Industry" sowie das Dokument WO 2010/023059 A2 offenbaren bionisch optimierte Bauteile für die Luftfahrtindustrie, die eine skelettartige Struktur aufweisen und durch additive Fertigungsverfahren hergestellt werden.

Aufgabe der Erfindung ist es, einen Lagerstern für eine Strömungsmaschine zu schaffen, der die vorgenannten Nachteile beseitigt und bei einem geringen Gewicht hochbelastbar ist. Des Weiteren ist es Aufgabe der Erfindung, ein Verfahren zur Herstellung eines hochbelastbaren Lagersterns in Leichtbauweise sowie eine gewichtsreduzierte Strömungsmaschine zu schaffen.

Diese Aufgabe wird gelöst durch einen Lagerstern mit den Merkmalen des Patentanspruchs 1, durch ein Verfahren zur Herstellung eines Lagersterns mit den Merkmalen des Patentanspruchs 9, sowie durch eine Strömungsmaschine mit den Merkmalen des Patentanspruchs 10.

Ein erfindungsgemäßer Lagerstern für eine Strömungsmaschine zum Lagern zumindest eines Rotors mit einem Innenring zur Positionierung eines Rotorlagers hat eine Vielzahl von Radialstreben die über den Außenempfang des Innenrings verteilt sind und kopfseitig mit einem Maschinengehäuse verbindbar sind. Erfindungsgemäß hat der Lagerstern zumindest abschnittsweise eine bionische Struktur.

Durch die zumindest abschnittsweise bionische Struktur hat der erfindungsgemäße Lagerstern zumindest abschnittweise eine wabenartige, porenartige und/oder skelettartige Struktur, die optimal an mechanische und thermische Belastungen angepasst ist. Vorzugsweise ist die bionische Struktur vollständig in dem Lagerstern ausgebildet. Ein derartiger Lagerstern zeichnet sich bei einem minimalen Gewicht durch eine maximal notwendige Steifigkeit und durch eine maximal notwendige Festigkeit aus. D.h., ein erfindungsgemäßer Lagerstern ist bei einem minimalen Gewicht hochbelastbar.

Bevorzugterweise ist ausgehend von einem Sternbereich mit einer mittleren Belastung in höher belasteten Sternbereichen mehr Material und in geringer belasteten Sternbereichen weniger Material vorgesehen. Hierdurch werden nicht erforderliche Materialanhäufungen in weniger beanspruchten Sternbereichen reduziert, was sich günstig auf das Gesamtgewicht des Lagersterns auswirkt.

Beispielsweise sind bei einem Ausführungsbeispiel die Radialstreben ausgehend vom Innenring radial nach außen materialverjüngt sind. Radial von außen nach innen betrachtet sind die Radialstreben somit in Richtung des Innenrings materialverstärkt.

Zur Schwingungsreduzierung ist es vorteilhaft, wenn die bionische Struktur Dämpfungsbereiche und/oder Federbereiche aufweist.

Zur stabilen und belastbaren Abstützung des Lagersterns an dem Maschinengehäuse ist es vorteilhaft, wenn die Radialstreben jeweils einen Kopfbereich haben, der gegenüber einem benachbarten radial innen Strebenbereich materialverstärkt ist.

Um die Radialstreben mit einem minimalem Querschnitt ausbilden zu können ohne ein Knicken derselben unter Belastung befürchten zu müssen, erstrecken sich kopfseitige Aufnahmen zur Anbindung an das Maschinengehäuse koaxial zur Längsachse der Radialstreben des erfindungsgemäßen Lagersterns, so dass die Belastungen nicht versetzt zur Längsachse in die Radialstreben eingeleitet werden und somit keine Momente in den Radialstreben aufgrund der Anbindung eingeleitet werden.

Um Spannungsspitzen im Außenumfangsbereich zu verhindern, gehen die Radialstreben vorzugsweise fließend in den Innenring über.

Um eine Verschmutzung und/oder Beschädigung der bionischen Struktur zu verhindern, ist es vorteilhaft, wenn diese außenumfangsseitig geschlossen ist. Dies kann beispielsweise durch Schließen von äußeren Strukturporen oder aber durch die Vorsehung einer die bionische Struktur beziehungsweise den Lagerstern umhüllenden Außenhaut erfolgen.

Bei einem erfindungsgemäßen Verfahren zur Herstellung eines Lagersterns wird dieser generativ mit einer zumindest abschnittsweisen bionischen Struktur aufgebaut. Die generative Herstellung wie selektives Laserschmelzen (SLM) oder Lasersintern ermöglicht eine beliebige bzw. nahezu beliebige Strukturgebung und ist zudem technisch gut beherrschbar. Die Struktur ist somit wabenartig, porenartig, skelettartig. Die generative Herstellung ermöglicht beispielsweise die Ausbildung einer beliebigen Anzahl von Radialstreben, eine beliebige Anordnung der Radialstreben relativ zueinander sowie beliebige Radialstrebenquerschnitte. Des Weiteren ermöglicht die generative Herstellung beispielsweise eine gegenseitige Abstützung der Radialstreben durch beispielsweise Umfangsstreben. Geometrische Beschränkungen aufgrund von beispielsweise Gießformen wie bei bekannten Herstellungsverfahren existieren nicht. Zudem ermöglicht das generative Verfahren die Ausbildung von integralen dämpfenden oder federnden Strukturbereichen.

Eine erfindungsgemäße Strömungsmaschine hat zumindest einen erfindungsgemäßen Lagerstern. Ein derartiger Lagerstern ist gegenüber bekannten, herkömmlich hergestellten Lagersterne bei gleicher Belastbarkeit gewichtsreduziert, so dass sich eine derartige Strömungsmaschine zumindest durch ein geringeres Gewicht auszeichnet, was insbesondere günstig beim Einsatz von Strömungsmaschine als Flugtriebwerke ist.

Sonstige vorteilhafte Ausführungsbeispiele der Erfindung sind Gegenstand weiterer Unterhaltssprüche.

Im Folgenden wird ein bevorzugtes Ausführungsbeispiel der Erfindung anhand stark vereinfachter schematischer Darstellungen näher erläutert. Es zeigen:
- Figur 1: einen Querschnitt durch einen erfindungsgemäßen Lagerstern, und
- Figur 2: eine Detaildarstellung einer Radialstrebe des Lagersterns aus Figur 1.

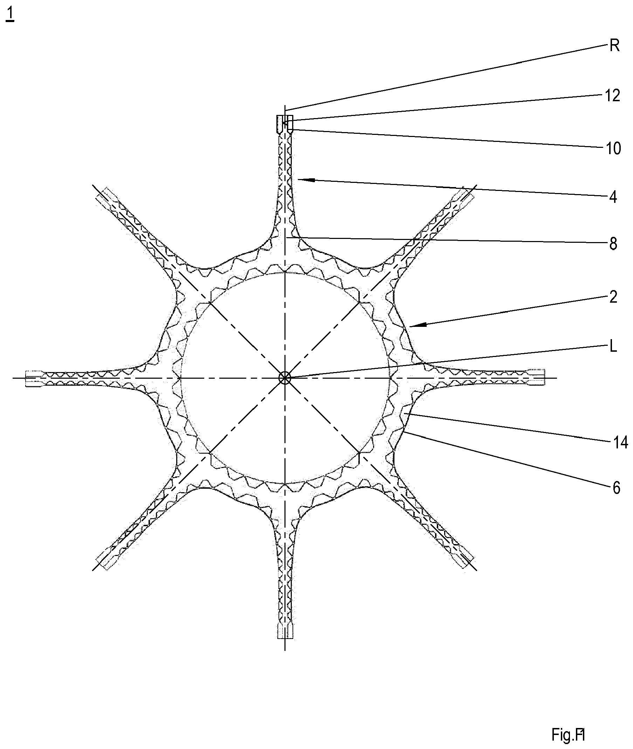

In Figur 1 ist ein Querschnitt durch einen beispielhaften erfindungsgemäßen Lagerstern 1 gezeigt. Dieser ist eine statische Struktur einer Strömungsmaschine wie ein Flugtriebwerk oder eine stationäre Gasturbine und dient zum einseitigen Lagern zumindest eines Maschinenrotors. Er hat einen Innenring 2 zur Positionierung eines Rotorlagers und eine Vielzahl von Radialstreben 4, die hier gleichmäßig über den Außenumfang 6 des Innenrings 2 verteilt sind und sich bezogen auf eine Längsachse L des Lagersterns 1 von diesem radial nach außen erstrecken. Im in der Strömungsmaschine montierten Zustand ist die Längsachse L des Lagersterns 1 gleich einer Rotorlängsachse bzw. einer Maschinenlängsachse. Die Radialstreben 4 haben jeweils einen radial inneren Fußbereich 8, mittels den am Innenring 2 beziehungsweise an dessen Außenumfang 6 angebunden sind, und einen radial äußeren Kopfbereich 10 mit einer Aufnahme 12 zur Anbindung an ein im montierten Zustand den Lagerstern 1 umgebendes Maschinengehäuse. Beispielsweise ist der Lagerstern 1 zwischen einer Hochdruckturbine und einer Niederdruckturbine angeordnet und trägt dabei als statische Struktur ein Lager des Hochdruckrotors sowie ein Lager der Niederdruckturbine.

Wie durch die trapezartigen Waben angedeutet, hat der Lagerstern 1 eine ihn vollständig durchsetzende bionische Struktur 14. Er hat somit eine knochenartige Struktur, die belastungs- und gewichtsoptimiert ist. D.h. ausgehend von einem Sternbereich mit einer mittleren Belastung ist in höher belasteten Sternbereichen mehr Material und in geringer belasteten Sternbereichen weniger Material vorgesehen. Der Lagerstern 1 zeichnet sich daher bei einem minimalen Gewicht durch eine maximal notwendige Steifigkeit und durch eine maximal notwendige Festigkeit aus. Zudem ist die bionische Struktur mit Dämpfungsbereichen und/oder Federbereichen zur Schwingungsreduzierung versehen. Der Lagerstern 1 besteht in dem gezeigten Ausführungsbeispiel aus einem temperaturfesten Material wie Metall oder einer temperaturfesten Materiallegierung.

Der Lagerstern 1 ist im montierten Zustand verkleidet (nicht gezeigt). Insbesondere die Radialstreben 4 befinden sich im montierten Zustand im Heizgaspfad der Strömungsmaschine. Zum Schutz vor den hohen Temperaturen und zur Vergleichmäßigung einer Heißgasströmung sind diese von einer profilartigen Verkleidung umgeben. Somit können die Radialstreben 4 nahezu ausschließlich unter Berücksichtigung von Festigkeits- und Steifigkeitskriterien ausgelegt werden. Aerodynamische Aspekte sind nur insofern zu berücksichtigen, als dass eine unnötige Querschnittsreduzierung des Heißgaspfades verursacht von den den Heißgaspfad durchsetzenden Radialstreben 4 zu verhindert ist. Selbstverständlich können die Radialstreben 4 auch nicht von profilartigen Verkleidungen umgeben sein und so unmittelbar der Heißgasströmung ausgesetzt sein. Dann sind allerdings bei der Auslegung der Radialstreben 4 auch aerodynamische Aspekte verstärkt zu berücksichtigen.

Um eine Beschädigung der bionischen Struktur 14 zu verhindern, ist diese außenumfangsseitig geschlossen und somit glattwandig ausgebildet. Bei einem Ausführungsbeispiel sind die äußeren Waben der Struktur 14 geschlossen ausgebildet. Bei einem alternativen Ausführungsbeispiel ist die Struktur von einer dünnwandigen Außenhaut umgeben.

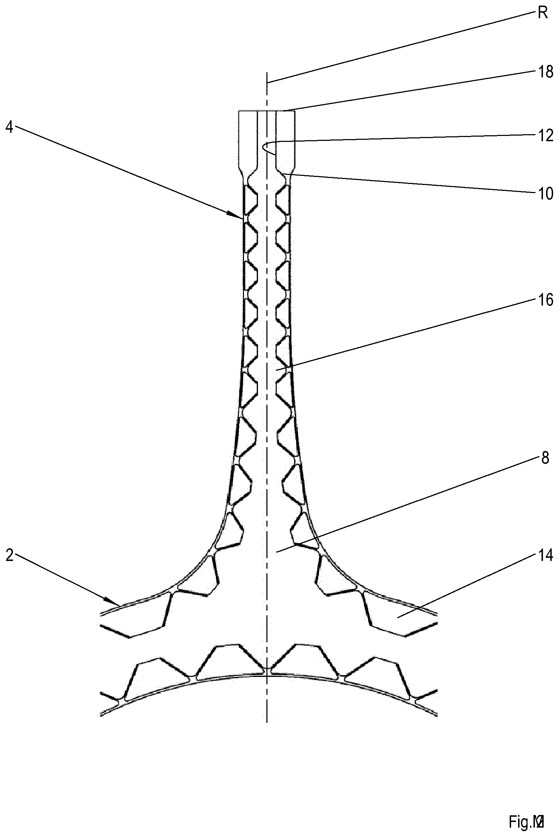

Wie in Figur 1 gezeigt, weist der Innenring 2 über seinen Umfang eine konstante Materialstärke auf. Die Radialstreben 4 sind, wie in Figur 2 gezeigt, ausgehend von ihren Fußbereichen 8 bzw. ausgehend vom Innenring 2 radial nach außen bis zu ihren Kopfbereichen 10 bevorzugterweise kontinuierlich materialverjüngt. Die größte Materialstärke weisen sie somit jeweils in ihren Fußbereichen 8 und somit im Übergangsbereich zum Innenring 2 auf. Ihre Kopfbereiche 10 sind gegenüben einem jeweils vorhergehenden Strebenbereich 16 materialverstärkt. Zur Vermeidung von Spannungspitzen aufgrund von zum Beispiel stufenartigen Außenkonturen ist der Lagerstern 1 mit verrundenten Übergängen und generell mit einer verrundeten Außenkontur versehen. Die Radialstreben 4 gehen zum Beispiel fließend in den Innenring 2 über. Ebenso gehen die Kopfbereiche 10 fließend in die mittleren Strebenbereiche 16 über.

Die Aufnahmen 12 sind stirnseitig in die Kopfbereiche 10 eingebracht. In dem erfindungsgemäßen Lagerstern sind die Aufnahmen 12 Schraubenaufnahmen, die sich koaxial zur Längsachse R der Radialstreben 4 erstrecken. Im montierten Zustand liegen die Kopfbereiche 12 mit ihren Stirnflächen 18 plan an dem Maschinengehäuse an und sind über eine Vielzahl von Radialschrauben mit diesem verschraubt.

Ein erfindungsgemäßes Verfahren zur Herstellung des Lagersterns 1 sieht vor, diesen generativ, beispielsweise mit Hilfe eines selektiven Laserschmelzverfahrens (SLM) oder Lasersintern, herzustellen.

Dabei wird bevorzugterweise auf die sogenannte SKO-Methode (Soft-Kill-Option) zurückgegriffen, die einen Mineralisationsvorgang im Knochen simuliert. Hierdurch werden hochbelastete Sternbereiche wie die Fußbereiche 8 und die Kopfabschnitte 10 ausgesteift und unterbelastete Bereiche wie die mittleren Strebenbereiche 16 aufgeweicht.

Zur Erzeugung eines Computermoduls einer optimalen bionischen Struktur 14 wird ausgehend von einem anhand von Randbedingungen wie mechanischen Belastungen und Lagersterngröße definierten Ausgangsmodel des Lagersterns 1 ein iterativer Gestaltungsprozess durchgeführt, bei dem schrittweise eine Verfeinerung des Ausgangsmodels erfolgt. Diese Prozessschleife wird solange durchlaufen, bis ein Endmodel vorliegt, das die endgültige bionische Struktur 14 abbildet bzw. aufweist. Nach der Erzeugung des Endmodels wird dieses dann generativ aufgebaut.

Offenbart ist ein Lagerstern für eine Strömungsmaschine mit einer zumindest abschnittsweisen bionischen Struktur, ein Verfahren zur Herstellung eines derartigen Lagersterns sowie eine Strömungsmaschine.

### Bezugszeichenliste

- 1: Lagerstern
- 2: Innenring
- 4: Radialstrebe
- 6: Außenumfang
- 8: Fußbereich
- 10: Kopfbereich
- 12: Aufnahme
- 14: bionische Struktur
- 16: Strebenbereich
- 18: Stirnfläche

- L: Längsachse Lagerstern
- R: Längsachse Radialstrebe

## Patentansprüche

1. Lagerstern (1) für eine Strömungsmaschine zum Lagern zumindest eines Rotors mit einem Innenring (2) zur Positionierung eines Rotorlagers und mit einer Vielzahl von Radialstreben (4), die über den Außenumfang (6) des Innenrings (2) verteilt sind und kopfseitig mit einem Maschinengehäuse verbindbar sind,
**dadurch gekennzeichnet, dass**
der Lagerstern (1) zumindest abschnittsweise eine bionische Struktur (14) hat, die wabenartig, porenartig und/oder skelettartig ist,
wobei
sich kopfseitige Aufnahmen (12) zur Anbindung an dem Maschinengehäuse koaxial zur Längsachse (R) der Radialstreben (4) erstrecken.

2. Lagerstern nach Anspruch 1, wobei ausgehend von einem Sternbereich mit einer mittleren Belastung in höher belasteten Stembereichen mehr Material und in geringer belasteten Sternbereichen weniger Material vorgesehen ist.

3. Lagerstern nach Anspruch 1 oder 2, wobei die Radialstreben (4) ausgehend vom Innenring (2) radial nach außen materialverjüngt sind.

4. Lagerstern nach Anspruch 3, wobei die Radialstreben (4) jeweils einen Kopfbereich (10) haben, der gegenüber einem benachbarten radial inneren Strebenbereich (16) materialverstärkt ist.

5. Lagerstern nach einem der vorhergehenden Ansprüche, wobei die bionische Struktur (14) Dämpfungsbereiche und/oder Federbereiche aufweist.

6. Lagerstern nach einem der vorhergehenden Ansprüche, wobei die Radialstreben (4) fließend in den Innenring (2) übergehen.

7. Lagerstern nach einem der vorhergehenden Ansprüche, wobei die bionische Struktur (14) außenumfangsseitig geschlossen ist.

8. Verfahren zur Herstellung eines Lagersterns (1) nach einem der vorhergehenden Ansprüche, wobei der Lagerstern (1) generativ mit einer zumindest abschnittsweisen bionischen Struktur (14) aufgebaut wird.

9. Strömungsmaschine mit einem Lagerstern nach einem der Ansprüche 1 bis 7,

## Claims

1. A star-shaped bearing support (1) for a turbomachine for supporting at least one rotor, comprising an inner ring (2) for positioning a rotor bearing and comprising a plurality of radial struts (4) which are distributed over the outer circumference (6) of the inner ring (2) and can be connected to a machine housing, **characterized in that** the star-shaped bearing support (1) has, at least in some parts, a bionic structure (14) which is honeycomb-like, porous and/or skeletal, wherein receptacles (12) at the top for connection to the machine housing extend coaxially with respect to the longitudinal axis (R) of the radial struts (4).

2. The star-shaped bearing support according to claim 1, wherein, starting from a star region with a moderate loading, in star regions with higher loading more material is provided and in star regions with lower loading less material is provided.

3. The star-shaped bearing support according to claim 1 or 2, wherein the material of the radial struts (4) is tapered, starting from the inner ring (2), radially towards the exterior.

4. The star-shaped bearing support according to claim 3, wherein the radial struts (4) in each case have a top region (10) where the material is reinforced with respect to an adjacent radially inner strut region (16).

5. The star-shaped bearing support according to one of the preceding claims, wherein the bionic structure (14) has damping regions and/or spring regions.

6. The star-shaped bearing support according to one of the preceding claims, wherein the radial struts (4) merge smoothly into the inner ring (2).

7. The star-shaped bearing support according to one of the preceding claims, wherein the bionic structure (14) is closed on the outer circumference.

8. A method for producing a star-shaped bearing support (1) according to one of the preceding claims, wherein the star-shaped bearing support (1) is constructed generatively with a bionic structure (14) at least in some parts.

9. A turbomachine with a blade arrangement according to one of claims 1 to 7.

## Revendications

1. Supportage de palier en étoile (1) pour une turbomachine pour l'entreposage d'au moins un rotor avec un anneau interne (2) pour le positionnement d'un palier de rotor et avec une pluralité de bras radiaux (4), qui sont répartis sur la circonférence extérieure (6) de l'anneau interne (2) et raccordables à un boîtier de machine du côté de la tête, **caractérisé en ce que** le supportage de palier en étoile (1) possède une structure bionique (14) au moins par section, qui est alvéolée, en pores et/ou en squelette, les entrées du côté de la tête (12) pour le raccordement au boîtier de la machine s'étendant dans un sens coaxial par rapport à l'axe longitudinal (R) des bras radiaux (4).

2. Supportage de palier en étoile selon la revendication 1, où partant d'une section en étoile avec une charge moyenne, plus de matériau est prévu pour les sections en étoiles plus chargées et moins de matériau est prévu pour les sections en étoile moins chargées.

3. Supportage de palier en étoile selon la revendication 1 ou 2, les bras radiaux (4) partant de l'anneau interne (2) présentant un déficit en matériau en direction radiale vers l'extérieur.

4. Supportage de palier en étoile selon la revendication 3, chacun des bras radiaux (4) possédant une section de tête (10) qui est renforcée en matériau par rapport à une section interne de bras radial (16).

5. Supportage de palier en étoile selon l'une des revendications précédentes, la structure bionique (14) présentant des sections d'amortissement et/ou élastique.

6. Supportage de palier en étoile selon l'une des revendications précédentes, les bras radiaux (4) fusionnant de manière fluide avec l'anneau interne (2).

7. Supportage de palier en étoile selon l'une des revendications précédentes, la structure bionique (14) étant fermée du côté de la circonférence extérieure.

8. Procédé de fabrication d'un supportage de palier en étoile (1) selon l'une des revendications précédentes, le supportage de palier en étoile (1) étant généralement construit avec une structure bionique (14) au moins par section.

9. Turbomachine possédant un supportage de palier en étoile selon l'une des revendications 1 à 7.
